# EUROPÄISCHE PATENTANMELDUNG

(11) **EP 0 885 775 A2**
(43) Veröffentlichungstag der Anmeldung: **23.12.1998**
(21) Anmeldenummer: 98810455.0
(22) Anmeldetag: 18.05.1998
(51) Int. Cl.: B60Q 1/40, B60Q 1/38

(54) **Einrichtung zur zeitlich verzögerten Abgabe von elektrischen Steuersignalen nach Betätigung der Richtungsblinker eines Motorfahrzeugs**

(30) Priorität: 16.06.1997 CH 1458/97
(71) Anmelder: Brandt, Frans C.J., 9326 Horn (CH)
(72) Erfinder: Brandt, Frans C.J., 9326 Horn (CH)

(57) **Zusammenfassung**

Elektronische Einrichtung für Motorfahrzeuge welche nach einer digital voreinstellbaren Anzahl Blinksignale bzw. nach Ablauf einer analog voreinstellbaren Zeit mindestens ein Steuersignal abgibt. Dieses Signal kann unter anderem verwendet werden um den Fahrzeuglenker beispielsweise akustisch darauf aufmerksam zu machen, dass die Blinkanlage länger als vorgesehen in Betrieb ist. Beim sogen. Warnblinken ist die Einrichtung wirkungslos.

Die Einrichtung greift den beim Blinken auftretenden Spannungsanstieg an der Stromzuführung (5,6) der Blinklampen (3,4) rechts/links-selektiv über Dioden (7,8) ab und aktiviert über einen Signalsender (9,10) einen Signalempfänger (15,16). Letzterer generiert Signale welche über einen Entpreller/Pulsformer (19,20) einem Impulswächter/Timer (23,24) zugeführt werden, dessen Ausgangssignale (27,28) mit den Ausgangssignalen (21,22) der Entpreller/Pulsformer logisch verknüpft werden zum rechts/links-unabhängigen Steuersignal (34).

## Beschreibung

In Gegensatz zur automatischen Abschaltung der Blinkanlage bei Automobilen, welche im allgemeinen keine besonderen Probleme aufwirft, ist eine solche bei Zweiradmotorfahrzeugen wegen ihres besonderen Lenkverhaltens schwerer realisierbar und somit meistenfalls auch nicht vorgesehen. Deshalb ist es bei Motorrädern im allgemeinen die Aufgabe des Lenkers, die Blinkanlage von Hand zurückzustellen. Dabei ist nicht auszuschliessen, dass der Fahrzeuglenker die rechtzeitige Rückstellung vergisst, wodurch verkehrstechnische Missverständnisse entstehen und Unfälle verursacht werden können. Diese Gefahr wird noch verstärkt durch die erfahrungsgemäss hohe Fahrdynamik der Zweiradfahrer. Ein automatisches Warnsignal welches entweder den Fahrzeuglenker nach angemessener Verzögerungszeit daran erinnert, dass die Blinkanlage immer noch in Betrieb ist oder die Blinkanlage selbsttätig abschaltet, ggf. unter Abgabe eines Warnsignals für den Fahrzeuglenker, ist somit geeignet, die Verkehrssicherheit signifikant zu erhöhen.

Entsprechend gross ist dann auch die Anzahl der zur Erreichung dieser oder vergleichbarer Ziele vorgeschlagenen Einrichtungen.

So schlägt die Schweizer Patentschrift 538 948 die Verwendung von Warnsignalen unterschiedlicher Tonhöhe bei links- bzw. rechtsseitigem Blinken vor.

Die Deutsche Patentschrift 3 442 205 Al macht die automatische Abschaltung der Blinkanlage von der Fahrgeschwindigkeit abhängig.

Die Europäische Patentschrift 0 696 527 A2 macht die Dauer des Blinkens ebenfalls von der Fahrgeschwindigkeit abhängig.

Mehrere USA Patentschriften (3 876 976, 3 931 529, 4 363 022) verwenden Quecksilberschalter oder andere Kontaktgeber bzw. die von einem Gyroskopen erzeugten Signale (4 030 066).

Die Geschwindigkeit des Fahrzeugs wird von USA Patent 4 058 797 benutzt, eine Erweiterung dieses Prinzips (USA Patent 4 333 071) schliesst die zurücklegte Distanz sowie die Lenker-Bewegung ein.

In USA Patent 4 306 218 werden beispielsweise der zurückgelegte Weg oder die Rückstellung des Lenkrads als Kriterium eingesetzt.

In USA Patentschriften findet das Schalten der Gänge des Getriebes (4 125 827), ebenso wie die Verlagerung eines Gewichts (4 398 175) eine Anwendung.

Im USA-Patent 4 972 174 wird eine von einem Mikroprozessor gesteuerte Einrichtung beschrieben, welche neben der fahrgeschwindigkeitsabhängigen Abschaltung der Blinkanlage noch weitere Aufgaben, wie die Ueberwachung des Defektgehens der Blinklampen sowie das Warnblinken, zu erfüllen in der Lage ist.

Alle diese bekannten Verfahren haben jedoch mehr oder wenig schwerwiegende Nachteile:
- während des ganzen Blinkdauers abgegebene Warnsignale bedeuten insbesondere in bewohnten Gebieten eine unnötige Lärmbelastung sowie generell eine unerwünschte Ablenkung des Fahrzeuglenkers.
- der Einbezug der Fahrgeschwindigkeit als Kriterium für die Festlegung der Fahrzeit bis zum Abschalten der Blinkanlage bedingt beim nachträglichen Einbau in das Fahrzeug elektromechanische Eingriffe welche insbesondere bei Motorrädern meistens nicht oder nur schwer durchführbar oder dann zumindest kostenaufwendig sind.
- auch ist es in der Praxis kaum möglich, die optimale Fahrzeit für das Warnsignal bzw. das Abschalten der Blinkanlage von vornherein generell festzulegen. Eine während des Fahrens situativ vorzunehmende Einstellung belastet den Fahrzeugführer zusätzlich statt ihn, wie eigentlich angestrebt, zu entlasten. Gerade im mit frequenten Richtungs- und Fahrbahnwechseln verbundenen Stadtverkehr ist diese Ablenkung eher kontraproduktiv.
- Quecksilberschalter sowie Gyroskope und getriebestellungsabhängige Geber sind bei längerer Geradeausfahrt wie z.B. auf Autobahnen, naturgemäss unwirksam.

Vorteilhaft wäre hingegen eine relativ einfache Einrichtung, welche erst nach einer angemessenen zeitlichen Verzögerung zum Einsatz kommt und deshalb so eingestellt werden kann, dass sie normalerweise gar nicht in Erscheinung zu treten hat und erst bei ungewöhnlich lang ausbleibender Rückstellung der Blinkanlage Warnsignale abgibt. Dem Fahrzeuglenker bleibt es dann überlassen, nach eigenem Gutdünken und in Abhängigkeit der jeweiligen Verkehrssituation auf diese Signale zu reagieren oder sie nötigenfalls auch zu negieren. Dabei darf die Einrichtung beim sogen. Warnblinken auch nach Ueberschreiten der voreingestellten Anzahl Blinksignale bzw. der voreingestellten Verzögerungszeit keine Warnsignale erzeugen bzw. den Warnblinkbetrieb nicht abschalten. Ebensowenig darf die Einrichtung den schnellen bzw. mehrfachen Wechsel zwischen links und rechts Blinken beeinträchtigen.

Alle diese Anforderungen werden von der erfindungsgemässen Einrichtung ausnahmslos und kostengünstig erfüllt. Die Einrichtung ist insbesondere, aber nicht ausschliesslich, geeignet für den nachträglichen Einbau in Motorrädern welche bereits mit einer konventionellen manuell geschalteten Blinkanlage ausgerüstet sind, ohne dabei schwerwiegende Eingriffe in das vorhandene elektrische oder mechanische System notwendig zu machen.

Im folgenden wird die Einrichtung anhand mehrerer, für die verschiedenen Ausführungsvarianten zutreffenden Zeichnungen näher erläutert. Es sind diese:
- Zeichnung 1.: Prinzipielles Blockschaltbild der Einrichtung
- Zeichnung 2.: Signalgeber/Empfänger mit Optokoppler sowie NICHT-Glieder und monostabile Multivibratoren als Entpreller/Pulsformer
- Zeichnung 3.: Signalgeber/Empfänger mit EIN-AUS-Schaltrelais sowie NICHT-Glieder und monostabile Multivibratoren als Entpreller/Pulsformer
- Zeichnung 4.: Signalgeber/Empfänger mit EIN-EIN-Schaltrelais sowie NICHT-Glieder als Entpreller/Pulsformer
- Zeichnung 5.: Signalgeber/Empfänger mit EIN-EIN-Schaltrelais und NICHT-UND-Gatter als Entpreller/Pulsformer
- Zeichnung 6.: Impulswächter und analoger Timer mit UND/NICHT-ODER-Gatter als Steuersignalgeber
- Zeichnung 7.: Impulswächter und digitaler Zähler/Timer mit UND/NICHT-ODER-Gatter als Steuersignalgeber

Die Blinkgeber der heutigen Blinkanlagen sind mehrheitlich mit elektronisch gesteuerten Schaltrelais ausgestattet. Auch werden noch thermisch gesteuerte sogen. Bimetallschalter angewendet. Erfahrungsgemäss lässt sich, unabhängig von der Wahl des verwendeten Blinkgebers, das sogen. Prellen der Schalterkontakte dieser Blinkgeber nicht vermeiden. Beim Betrieb der Blinkanlage stört dies zwar weiter nicht, für den Betrieb der erfindungsgemässen Einrichtung würde das Prellen dieser Kontakte aber zu unerwünschten Störimpulsen führen.

Insbesonders im Sinne einer breiten Anwendbarkeit der erfindungsgemässen Einrichtung ist es deswegen notwendig, die durch das Prellen verursachten Störimpulse wirksam zu unterdrücken.

Deshalb ist den verschiedenen Ausführungsformen der Erfindung gemeinsam, dass die von der rechts- bzw. linksseitigen Stromzuführung der Blinklampen stammenden Spannungsimpulse zuerst einem Signalsender/Signal-empfänger mit nachfolgendem Entpreller/Pulsformer zugeleitet werden, bevor ihre weitere Verarbeitung stattfinden kann.

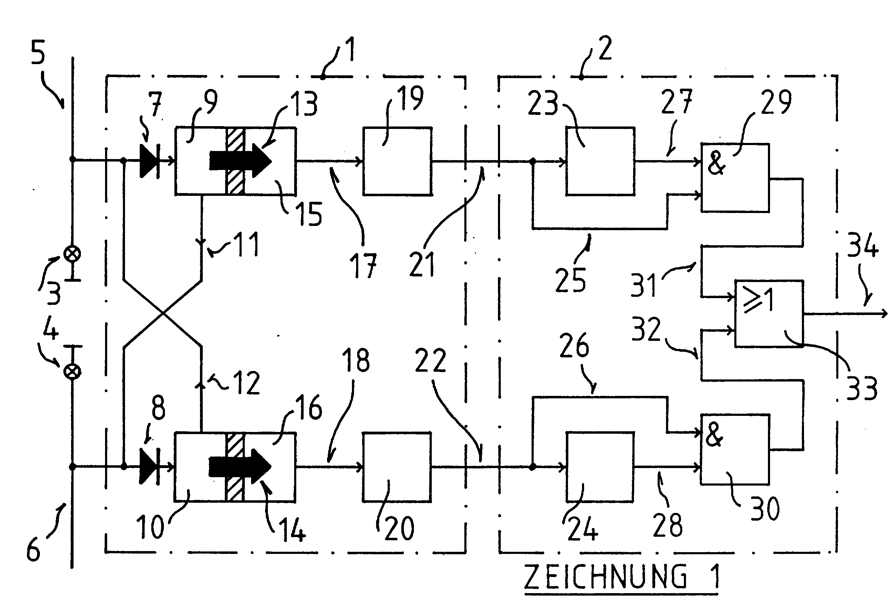

Die Einrichtung (Zeichnung 1) ist in ihren verschiedenen Ausführungsvarianten aus zwei Blöcken (1,2) aufgebaut.

Der erste Block (1) erzeugt elektrische Signale beim Auftreten von Blinksignalen in den Stromzuführungen (5,6) von entweder einer rechten (3) oder einer linken (4) Blinklampe, nicht aber bei gleichzeitig auf beiden Seiten des Fahrzeugs auftretenden Blinksignalen (sogen. Warnblinken). Diese Signale werden anschliessend vom Entpreller/Pulsformer (19,20) systemkompatibel normiert, sodass sie bei allen Varianten der Einrichtung am Ausgang des ersten Blocks (1) störungsfrei als komplementäre Signalpaare, jeweils rechtsseitig (21) bzw. linksseitig (22) zugeordnet, zur Verfügung stehen.

Der zweite Block (2) überwacht die Stetigkeit der im ersten Block (1) erzeugten Signale (21,22) sowie die Gesamtzeitdauer des Blinkens und erzeugt bei Erfüllung des Kriteriums "Anzahl Blinksignale rechts- oder linksseitig überschritten" bzw. bei "Blinkdauer rechts- oder linksseitig überschritten" ein rechts/links-unabhängiges Steuersignal 34.

Der erste Block (1) der Einrichtung (Zeichnung 1) wird nun in seiner Funktionsweise eingehender beschrieben. Er greift den beim rechtsseitigen (linksseitigen) Blinken auftretenden Spannungsanstieg auf der vom Blinkgeber geschalteten Stromzuführung 5 (6) einer rechten (linken) Blinklampe 3 (4) ab und führt ihn über eine Diode 7 (8) und nötigenfalls über einen nicht eingezeichneten Widerstand einem rechtsseitigen (linksseitigen) Signalsender 9 (10) zu.

Um den Stromkreislauf des rechten bzw. linken Signalsenders 9 (10) zu schliessen sind letztere ausgangsseitig über die Leitung 11 (12) mit der vom Blinkgeber geschalteten Stromzuführung 6 (5) der linksseitigen (rechtsseitigen) Blinklampe 4 (3) verbunden.

Der Signalsender sendet berührungsfrei ein Signal 13 (14) zu einem Signal-Empfänger 15 (16). Dieser Signal-empfänger erzeugt ein elektrisches Signal 17 (18) welches im allgemeinen noch mit Störungen überlagert ist. Beide Signale (17,18) werden in einem nachfolgenden Entpreller/Pulsformer 19 (20) zu einem störungsfreien, systemkompatibel normierten und komplementären Signalpaar 21 (22) umgeformt. Diese Ausgangssignale 21 (22) werden anschliessend von den Schaltungsbauteilen des zweiten Blocks (2) rechts/links-selektiv weiterverarbeitet.

Der zweite Block (2) der Einrichtung (Zeichnung 1) wird nun in seiner Funktionsweise eingehender beschrieben. Er enthält rechts- bzw. linksseitig zugeordnet je eine Impulswächter/Timer-Einheit 23 (24), sowie ein oder mehrere seitenunabhängige UND/ODER- bzw. UND/NICHT-ODER-Gatter zwecks Signalverknüpfung der beim rechtsseitigen bzw. linksseitigen Blinken erzeugten Signale, hier beispielsweise dargestellt durch die beiden UND-Gatter 29 (30) und das ODER-Gatter 33.

Die Impulswächter/Timer-Einheit 23 (24) überprüft das stetige Eintreffen der beim Betrieb der Blinkanlage in der Einrichtung erzeugten Signale. Das Ausschalten der Blinkanlage bzw. der Seitenwechsel von rechts auf links oder umgekehrt unterbricht die stetige Impulsfolge worauf der Impulswächter den Timer zurücksetzt. Der Timer erzeugt, vorausgesetzt dass er nicht vorher vom Impulswächter zurückgesetzt wurde, nach einer digital voreinstellbaren Anzahl von Blinksignalen bzw. nach einer analog voreinstellbaren Blinkdauer, ein Ausgangssignal 27 (28). Die von der Impulswächter/Timer-Einheit 23 (24) abgegebenen Signale 27 (28) werden, zusammen mit den vom Entpreller/Pulsformer 19 (20) erzeugten Ausgangssignalen 21 (22) den Signaleingängen der UND-Gatter 29 (30) über die Leitungen 25 (26) zugeführt. Die jeweiligen Ausgangssignale der UND-Gatter 29 (30) werden über die Leitungen 31 (32) den Signaleingängen des ODER- bzw. NICHT-ODER-Gatters 33 zugeführt wobei am Signalausgang dieses Gatters ein vielseitig verwendbares, periodisch im Rhythmus der von der Blinkanlage abgegebenen Blinksignale pulsierendes Steuersignal 34 entsteht.

Dieses Steuersignal kann z.B. zur Ansteuerung eines Summers verwendet werden, welcher den Fahrzeuglenker auf den fortwährenden Betrieb der Blinkanlage aufmerksam macht. Falls die vorhandene Blinkanlage dies schaltungstechnisch zulässt, kann die erfindungsgemässe Einrichtung die Blinkanlage auch automatisch abschalten und dabei ggf. gleichzeitig den Fahrzeuglenker akustisch warnen.

Die Funktionsweise der vorliegenden Erfindung wird nun eingehender erklärt unter Einbezug von integrierten Elektronikbausteinen aus einer unter dem Namen Transistor-Transistor-Logik (TTL) allgemein bekannten und vielseitig angewandten Technik, ohne damit jedoch die Verwendung ähnlicher Verfahren zur Verwirklichung der erfindungsgemässen Einrichtung auszuschliessen. In diesem Sinne werden im nachfolgenden Typenbezeichnungen integrierter TTL-Schaltkreise verwendet, welche stellvertretend für die verwendeten Funktionen, wie z.B. von Asynchronzähler, monostabile Multivibratoren, logische Gatter usw. stehen.

Zuerst werden die vier verschiedenen Ausführungsformen für die Verwirklichung vom ersten Block (1) der Einrichtung (Zeichnung 1) dargelegt.

Der nachfolgend beschriebenen ersten und zweiten Ausführungsform des Signalsenders/Signalempfängers bzw. Entpreller/Pulsformers der Einrichtung ist gemeinsam, dass ein nicht-retriggerbarer monostabiler Multivibrator (sogen. nicht-retriggerbares Monoflop) mit geeignet gewählter und durch Beschaltung mit externen Beschaltungselementen (Widerstände, Kondenstoren, Dioden) bewerkstelligter Verweilzeit in den instabilen Zustand es den Störimpulsen verunmöglicht, die Schaltung zu beeinflussen, sobald der ersteintreffende Impuls das Monoflop aus seinem stabilen Zustand in den instabilen Zustand versetzt hat. Da das Monoflop bei geeignet gewählter Verweilzeit vor dem nächsten Blinksignal wieder vom instabilen Zustand in den stabilen Zustand zurückfällt, ist die Verarbeitung nachfolgender Signalimpulse uneingeschränkt gewährleistet.

Die Vorschaltung eines NICHT-Glieds mit Schmitt-Trigger-Funktion bzw. zweier solcher NICHT-Glieder in Serie zur Ansteuerung zweier oder mehr Signaleingängen des nicht-retriggerbaren Monoflops bewirkt aufgrund der Phasenverschiebung der Störimpulse und des sogen. Totbandes der Schmitt-Trigger eine weitere Sicherheit gegen Störimpulse.

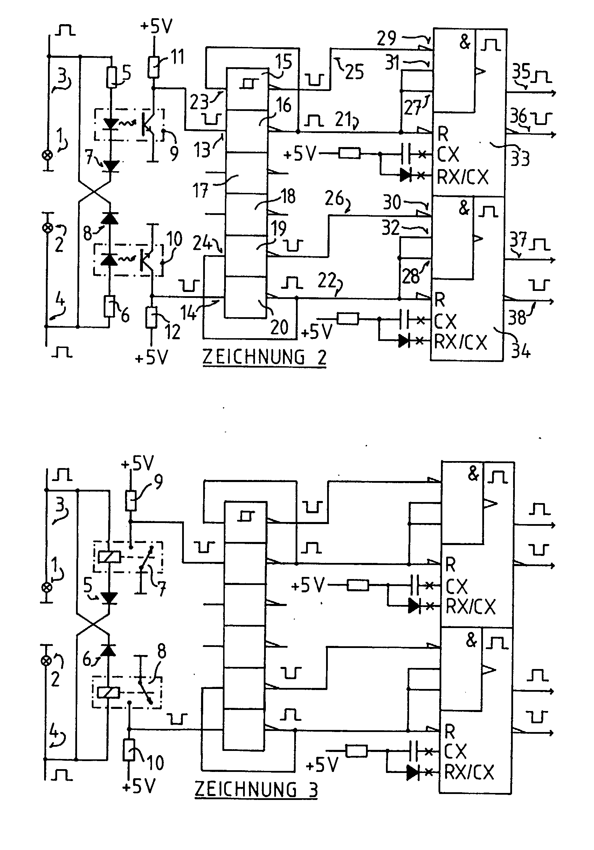

Bei der ersten Ausführungsform (Zeichnung 2) werden Optokoppler (9,10) als Signalsender/Empfänger benutzt. Als Entpreller/Pulsformer werden nicht-retriggerbare monostabile Multivibratoren (33,34) wie z.B. TTL-Type 74221 mit im Verhältnis zur Periodizität der Blinksignale kurzer Verweilzeit in den instabilen Zustand eingesetzt welche von NICHT-Glieder mit Schmitt-Trigger-Funktion (15,16,19,20) wie z.B. TTL Type 7414 angesteuert werden.

Beim rechtsseitigen (linksseitigen) Blinken der Blinklampe 1 (2) erzeugt der an der Stromzuführung 3 (4) der Blinklampe auftretende Spannungsanstieg einen durch den Widerstand 5 (6) begrenzten und durch die Diode 7 (8) rechts/links-selektiv zugeordneten Strom durch die jeweilige Licht Emittierende Diode (LED) des Optokopplers 9 (10). Dabei wird der hier als Beispiel eingezeichnete npn-Transistor des Optokopplers vom LED aktiviert. Die Verwendung anderer Optokoppler-Typen, wie beispielsweise mit pnp-Transistoren statt npn-Transistoren oder mit als Darlington-Schaltungen bekannten Transistor-Anordnungen ist damit aber keineswegs ausgeschlossen. Bei Aktivierung des Transistors einer der Optokoppler 9 (10) sinkt die Spannung am vorher durch den Widerstand 11 (12) auf einem Logisch-HIGH von beispielsweise 5 Volt gehaltenen Signaleingang 13 (14) des NICHT-Glieds 16 (20) auf einem Logisch-LOW von beispielsweise 0.2 Volt ab, was den Ausgang 21 (22) des NICHT-Glieds 16 (20) auf Logisch-HIGH einstellt. Dadurch werden die sogen. Zustands-Eingänge 27 (28) und 31 (32) sowie der Rückstelleingang "R" des Monoflops 33 (34) ebenfalls auf Logisch-HIGH gelegt. Gleichzeitig wird das Logisch-HIGH-Ausgangssignal 21 (22) des NICHT-Glieds 16 (20) dem Signaleingang 23 (24) des NICHT-Glieds 15 (19) zugeführt und von diesem an seinem Ausgang 25 (26) nach einer für das NICHT-Glied typischen Verzögerungszeit von beispielsweise 15 nanoSekunden in ein Logisch-LOW umgewandelt. Die abfallende Signalflanke dieser Umstellung erreicht den flankengesteuerten dynamischen Eingang 29 (30) des bereits an den Zustands-Eingängen 27 (28) bzw. 31 (32) vorbereiteten UND-Gatters des Monoflops 33 (34) um diese 15 nanoSekunden verzögert und versetzt dabei das Monoflop in den instabilen Zustand. Dabei ist das Monoflop gegenüber dem am jeweiligen Rückstelleingang "R" anliegenden Logisch-HIGH-Signal indifferent.

Durch geeignete Wahl der externen Beschaltungselemente (Widerstände, Kondensatoren, Dioden) der CX bzw. RX/CX-Eingänge der Monoflops wird eine Verweilzeit in den instabilen Zustand von beispielsweise 0.1 Sekunden Dauer vorgegeben, welche Zeit einerseits genügend lang ist um die Prellphase der Relaiskontakte völlig auszublenden aber andererseits kurz genug, um das Monoflop wieder rechtzeitig vor dem vom nächsten Blinksignal verursachten Signal in den stabilen Zustand zurückkehren zu lassen.

Die Ausgänge der Monoflops 33 (34) dieser Schaltung liefern, jeweils rechts- bzw. linksseitig zugeordnet, systemkompatible und paarweise komplementäre Signale (35,36 bzw. 37,38).

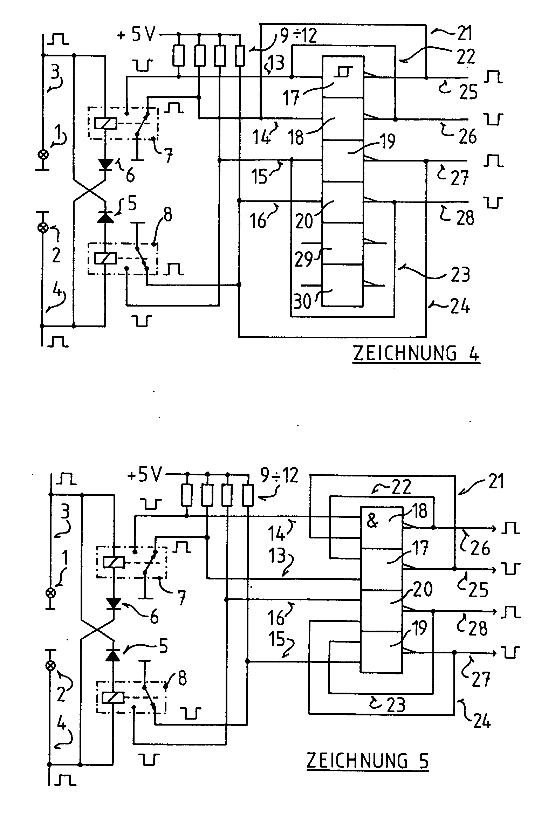

Bei der zweiten Ausführungsform (Zeichnung 3) werden Schaltrelais mit EIN-AUS-Funktion 7 (8) als Signalsender/Empfänger benutzt. Als Entpreller/Pulsformer werden NICHT-Glieder mit Schmitt-Trigger-Funktion (13,14,17,18) wie z.B. TTL Type 7414 eingesetzt welche nicht-retriggerbare monostabile Multivibratoren (33,34) wie z.B. vom TTL-Type 74221 mit im Verhältnis zur Periodizität der Blinksignale kurzer Verweilzeit in den instabilen Zustand ansteuern.

Beim rechtsseitigen (linksseitigen) Blinken der Blinklampe 1 (2) erzeugt der an der Stromzuführung der Blinklampe 3 (4) auftretende Spannungsanstieg mit Hilfe der Diode 5 (6) einen rechts/links-selektiv zugeordneten Strom durch das EIN-AUS-Schaltrelais 7 (8). Bei der Aktivierung eines dieser Schaltrelais sinkt die Spannung am vorher durch den Widerstand 9 (10) beispielsweise auf einem Logisch-HIGH von beispielsweise 5 Volt gehaltenen Signaleingang 11 (12) des NICHT-Glieds 14 (18) auf einem Logisch-LOW von 0 Volt ab, was den Ausgang 21 (22) des NICHT-Glieds 14 (18) auf Logisch-HIGH einstellt.

Damit ist die gleiche Ausgangslage wie bei der vorgängigen Beschreibung der von Optokopplern angesteuerten Entpreller/Pulsformern gegeben, sodass auf eine Wiederholung verzichtet werden kann.

Die Ausgänge dieser Schaltung liefern ebenfalls, jeweils rechts- bzw. linksseitig zugeordnet, systemkompatible und paarweise komplementäre Signale.

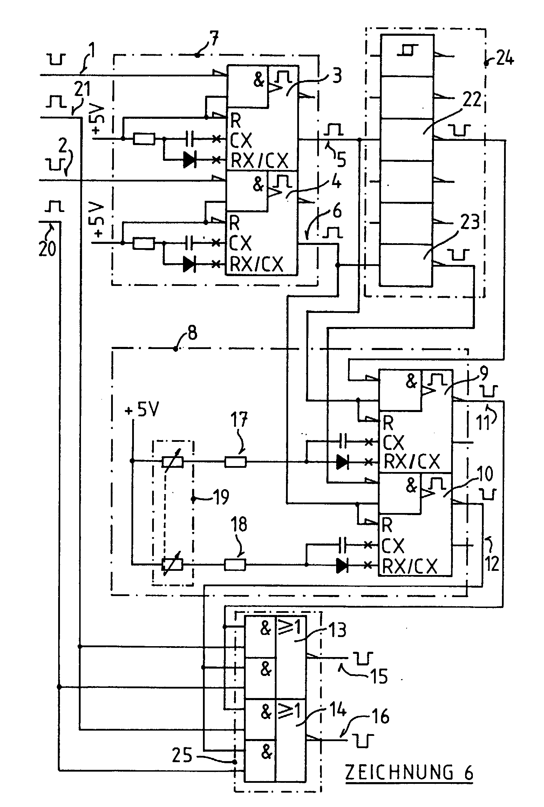

Die dritte Ausführungsform (Zeichnung 4) des Signalsender/Signalempfängers bzw. Entpreller/Pulsformers der Einrichtung verwendet für den Signal sender/Empfänger Schaltrelais mit einer EIN-EIN-Schaltfunktion (7,8). Als Entpreller/Pulsformer werden jeweils paarweise zwei NICHT-Glieder (17,18 bzw. 19,20) wie z.B. vom TTL-Type 7404 oder 7414 pro Schaltrelais eingesetzt.

Beim rechtsseitigen (linksseitigen) Blinken der Blinklampe 1 (2) erzeugt der an der Stromzuführung der Blinklampe 3 (4) auftretende Spannungsanstieg einen mit Hilfe der Diode 5 (6) rechts/links-selektiv zugeordneten Strom durch das EIN-EIN-Schaltrelais 7 (8). Bei der Aktivierung eines dieser EIN-EIN-Schaltrelais werden die Signaleingänge der zugehörigen NICHT-Glieder-Paare (13,14 bzw. 15,16) unter Mitwirkung der vier Widerstände (9,10 bzw. 11,12) von einem Logisch-LOW von 0 Volt auf einem Logisch-HIGH von beispielsweise 5 Volt bzw. umgekehrt, umgepolt. Die Rückführung des invertierten Ausgangssignals eines NICHT-Glieds der NICHT-Glieder-Paare (17,18 bzw. 19,20) über die Leitungen (21,22 bzw. 23,24) zum Signaleingang des jeweils anderen NICHT-Glieds dieser Paare verleiht dieser Schaltung ein bistabiles Verhalten welches dazu führt, dass ein Prellen der EIN-EIN-Schaltrelais und/oder der Blinkgeberkontakte ohne Auswirkung in der Form von Störimpulsen bleibt.

Die Ausgänge dieser Schaltung liefern, jeweils rechts- bzw. linksseitig zugeordnet, systemkompatible und paarweise komplementäre Signale (25,26 bzw. 27,28).

Die Verwendung von NICHT-Glieder hat bei der handelsüblichen Ausgestaltung der als Beispiel erwähnten TTL-Bausteinen den Vorteil, dass von den sechs in einem solchen Baustein vorhandenen NICHT-Glieder nur deren vier für die Entprellung/Pulsformung benötigt werden, sodass im Falle der Verwendung analoger Timer die zwei nicht benutzten NICHT-Glieder als Verzögerer für den Eingangsimpuls am flankengesteuerten dynamischen Eingang der Monoflops dieser analogen Timer kostensparend verwendet werden können.

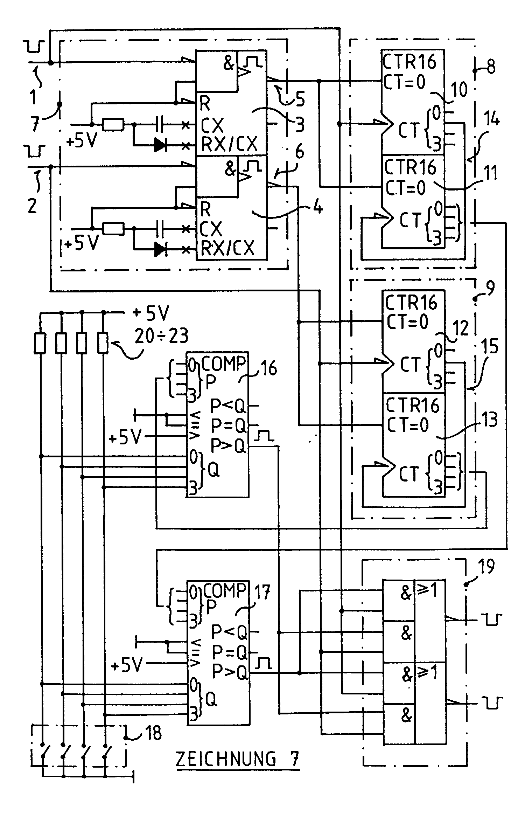

Die vierte Ausführungsform (Zeichnung 5) des Signalgeber/Signalempfängers bzw. Entpreller/Pulsformers der Einrichtung benutzt für den Signalsender/Empfänger ebenfalls Schaltrelais (7,8) mit EIN-EIN-Schaltfunktion. Als Entpreller/Pulsformer werden jeweils paarweise zwei NICHT-UND-Gatter (17,18 bzw. 19,20) wie z.B. vom TTL-Type 7400 pro Schaltrelais eingesetzt.

Beim rechtsseitigen (linksseitigen) Blinken der Blinklampe 1 (2) erzeugt der an der Stromzuführung der Blinklampe 3 (4) auftretende Spannungsanstieg mit Hilfe der Diode 5 (6) einen rechts/links-selektiv zugeordneten Strom durch das EIN-EIN-Schaltrelais 7 (8). Durch die Aktivierung eines der beiden EIN-EIN-Schaltrelais (7,8) werden die Signaleingänge der zugehörigen NICHT-UND-Gatterpaare (13,14 bzw. 15,16) unter Mitwirkung der vier Widerstände (9,10 bzw. 11,12) von einem Logisch-LOW von 0 Volt auf einem Logisch-HIGH von beispielsweise 5 Volt bzw. umgekehrt, umgepolt. Die Rückführung des invertierten Ausgangssignals eines NICHT-UND-Gatters der NICHT-UND-Gatterpaare (17,18 bzw. 19,20) über die Leitungen (21,22 bzw. 23,24) zum Signaleingang des jeweils anderen NICHT-UND-Gatters dieser Paare verleiht dieser Schaltung ein bistabiles Verhalten welches dazu führt, dass ein Prellen der EIN-EIN-Schaltrelais und/oder der Blinkgeberkontakte ohne Auswirkung in der Form von Störimpulsen bleibt.

Die Ausgänge dieser Schaltung liefern, jeweils rechts- bzw. linksseitig zugeordnet, systemkompatible und paarweise komplementäre (25,26 bzw. 27,28) Signale.

Da die handelsübliche Ausführung der erwähnten TTL-Bausteine nur über vier NICHT-UND-Gatter verfügt, sind NICHT-UND-Gatter nur dann vorteilhaft einzusetzen, wenn keine NICHT-Glieder für die nachfolgenden Impulswächter/Timer gebraucht werden, d.h. bei der Verwendung von digitalen Timern.

Die Ausgangssignale aller vier oben angeführten Schaltungen welche (Zeichnung 1) am Ausgang vom ersten Block (1) der Einrichtung, unabhängig von der jeweils gewählten Schaltungsanordnung, rechts-/links-selektiv zugeordnet und systemkompatibel als komplementäre Signalpaare, stellvertretend mit (21,22) bezeichnet zur Verfügung stehen, werden im zweiten Block (2) einem als Impulswächter dienenden Monoflop sowie einem die Verzögerungszeit digital bzw. analog bestimmenden Timer zugeführt.

Es wird nun zuerst (Zeichnung 6) die Ausgestaltung des Impulswächter/Timers mit einem analogen Timer, zusammen mit dem das rechts/links-unabhängige Steuersignal erzeugende Verknüpfungsglied, eingehender beschrieben.

Die rechtsseitig (linksseitig) zugeordneten Monoflops 3 (4) des Impulswächters 7 sind retriggerbar (z.B. TTL-Type 74423) und haben beispielsweise eine Verweilzeit in den instabilen Zustand von 1.2 Sekunden, welche Zeit prinzipiell geringfügig grösser zu sein hat als die verkehrsrechtlich zulässige grösste Periode der Blinkanlage. Diese Zeitdauer wird in der allgemein üblichen Weise durch die externen Beschaltungselemente (Widerstände, Kondensatoren, Dioden) dieser Monoflops vorgegeben. Das rechtsseitig (linksseitig) zugeordnete Monoflop 3 (4), dessen zustandsabhängiger Signaleingang, ebenso wie der Rückstelleingang "R" auf einem Logisch-HIGH von beispielsweise 5 Volt gehalten werden, verweilt nur so lange unterbruchslos in seiner instabilen Lage als die durch die Blinksignale erzeugten Signale 1 (2) stetig und innerhalb der Zeitspanne des instabilen Zustandes kommen. Beim Ausbleiben der Signale 1 (2), wie z.B. beim Abschalten der Blinkanlage oder Umschalten der Blinkanlage auf die andere Seite des Fahrzeugs, fällt das jeweilige Monoflop in den stabilen Zustand zurück. Dadurch ermöglicht das Monoflop die Ueberwachung der Stetigkeit des Betriebs der Blinkanlage. Die Ausgangssignale (5,6) der Monoflops (3,4) steuern den nachfolgend beschriebenen, die Verzögerungszeit analog bestimmenden Timer (8).

Dieser analoge Timer besteht zur Hauptsache aus zwei rechtsseitig (linksseitig) zugeordneten Monoflops 9 (10) wie z.B. die des TTL-Bausteins 74423. Diese Monoflops müssen aufgrund ihrer zulässigen externen Beschaltung mit Widerständen, Kondensatoren und Dioden in der Lage sein, eine genügend grosse Verweilzeit in den instabilen Zustand von z.B. 30 Sekunden zu garantieren. Die analoge Einstellung dieser Verweilzeit kann beispielsweise mittels eines sogen. Tandem-Potentiometers (19), welches als externes Beschaltungselement der RX-Eingänge die Verweilzeit des Timers (8) in den instabilen Zustand beeinflusst, durchgeführt werden, wobei mittels Vorwiderständen (17,18) eine minimale Verzögerungszeit fest voreingestellt werden kann. In einer einfacheren Ausführungsform dieses analogen Timers (8) können statt des Tandem-Potentiometers (19) auch Festwiderstände, ggf. über Lötbrücken oder dgl. wählbar, verwendet werden.

Das rechtsseitige (linksseitige) Ausgangssignal 5 (6) des Impulswächters wird unverzögert dem zustandsabhängigen Signaleingang und dem Rückstelleingang "R" und, jeweils über ein NICHT-Glied des NICHT-Bausteins 24 verzögert, als Signalflanke dem flankengesteuerten dynamischen Signaleingang des Monoflops 9 (10) zugeführt. Diese Anordnung bewirkt, das die Signalflanke der Signale 5 (6) um die für das jeweilig verwendete NICHT-Glied 22 (23) typische Signallaufzeit von beispielsweise 15 nanoSekunden später und in negierter Form am dynamischen Signaleingang des Monoflops 9 (10) eintrifft als am zustandsabhängigen Signaleingang oder am flankengesteuerten Rückstelleingang des Timer-Monoflops (24), wodurch dessen sichere Umsteuerung in den instabilen Zustand gewährleistet ist.

Es ist dabei vorteilhaft aber nicht zwingend notwendig, für diese NICHT-Glieder 22 (23) die nicht für den Entpreller/Pulsformer (Zeichnung 4) benötigten NICHT-Glieder (29,30) des beispielsweise erwähnten TTL-Bausteins 7414 kostensparend einzusetzen.

Sobald die vorgegebene Verweilzeit in den instabilen Zustand des jeweiligen Timer-Monoflops 9 (10) verstrichen ist, entsteht am Signalausgang 11 (12) ein auf Logisch-HIGH gehendes Signal, welches den Signaleingängen eines oder beider UND-Gatter eines Dual-UND/NICHT-ODER-Gatters (25), wie z.B. TTL-Type 7451, zugeführt wird. Die Verknüpfung mit den ebenfalls rechts-/linksseitig zugeordneten und gegenüber den Signalimpulsen 1 (2) komplementären Signalimpulsen 21 (20) vom Entpreller/Pulsformer erzeugt an den Ausgängen des jeweiligen Dual-UND/NICHT-ODER-Gatters (13,14) ein oder mehrere rechts/links-unabhängige Steuersignale (15 bzw. 16). Mit diesen Steuersignalen kann bei geeigneter Beschaltung beispielsweise ein Warnsignal erzeugt werden kann, welches den Fahrzeuglenker darauf aufmerksam macht, dass die Blinkanlage noch in Betrieb ist. Auch kann, die entsprechende Eignung der Blinkanlage vorausgesetzt, letztere, ggf. unter Abgabe eines Warnsignals, ausgeschaltet werden.

Es wird nun die digitale Ausgestaltung des Impulswächter/Timers eingehender dargelegt (Zeichnung 7), wobei auf die bei der analogen Ausgestaltung bereits vorgehend stattgefundenen Beschreibung der Eigenschaften des Impulswächters sowie des UND/NICHT-ODER-Gatters Bezug genommen wird.

In dieser digitalen Variante der Einrichtung werden die rechts-/linksseitig zugeordneten, entprellten und systemkompatibel normierten Signale 1 (2) des Entpreller/Pulsformers sowohl den Monoflops 3 (4) des Impulswächters (7) als auch den Zähleingängen eines rechts- bzw. linksseitig zugeordneten und vorzugsweise aus jeweils einem Dual-4-Bit-Asynchronzähler wie z.B. vom TTL-Type 74393 aufgebauten und wahlweise als 6-,7- oder 8-Bit-Zähler geschalteten Asynchronzählers (8,9) zugeführt. Weiters werden diese Signale oder die ebenfalls vom Entpreller/Pulsformer bereitgestellten und mit letzteren komplementären Signale den Signaleingängen des UND/NICHT-ODER-Gatters (19) zugeführt. Die Funktion des Impulswächters ist identisch mit der Funktion des bereits bei der Ausgestaltung des Impulswächter/Timers mit analogem Timer beschriebenen Impulswächters, sodass hier auf eine vollständige Wiederholung verzichtet werden kann. Desgleichen gilt für die Funktion des UND/NICHT-ODER-Gatters.

Das rechts-/linksseitig zugeordnete Ausgangssignal 5 (6) der Monoflops 3 (4) des Impulswächters (7), welches bei stetigem Blinken der Blinkanlage ununterbrochen einen Logisch-LOW-Pegel aufweist, wird an die Rückstelleingänge (CT=0) der Asynchronzähler (10,11 bzw. 12,13) gelegt, was das Zählen der an die Zähleingänge der Asynchronzähler 10 (12) eintreffenden und durch die Blinksignale verursachten Impulse ermöglicht. Das Resultat dieser Zählvorgänge erscheint binär kodiert an den Zählausgängen (CT 0..3) der Asynchronzähler 10(12). Einer dieser Zählausgänge (CT 0..3) ist jeweils mit dem Zähleingang des ihm nachgeschalteten Asynchronzählers 11 (13) verbunden. Die Auswahl des Zählausganges (CT 0..3) bestimmt dabei sowohl die maximal einstellbare Impulszahl als auch die Schrittgrösse dieser Einstellung. Die Logikpegel der vier Zählausgänge (CT 0..3) der Asynchronzähler 11 (13) werden mit Hilfe von als Komparatoren (Vergleicher) bekannten elektronischen Bausteinen, wie z.B. vom TTL-Type 7485, mit einer digital in der Form von Logikpegeln voreinstellbaren Impulszahl verglichen. Dazu werden diese Zählausgänge (CT 0..3) mit den Istwert-Eingängen (P 0..3) der Komparatoren 16 (17) verbunden. Die Uebertragungseingänge "<" bzw. "=" werden an Logisch-LOW, der Uebertragungseingang ">" an Logisch-HIGH gelegt. Der Komparator vergleicht die an seinem Istwert-Vergleichseingang (P 0..3) anliegenden und vom Asynchronzähler 11 (13) vorgegebenen Logikpegel (CT 0..3) mit den von einem 4-Bit-Kodierschalter (18) und den ihm zugeordneten vier Widerständen (20 bis 23) erzeugten und am Sollwert-Eingang des Komparators (Q 0..3) anliegenden Logikpegeln. Sobald einer dieser rechts- bzw. linksseitig zugeordneten Komparatoren 16 (17) das Ueberschreiten der vorgegebenen Impulszahl feststellt, geht der Ausgang (P>Q) der Komparatoren auf Logisch-HIGH. Mit diesem Signal können die bereits bei der Ausgestaltung des Impulswächter/Timers mit einem analogen Timer näher beschriebenen UND/NICHT-ODER-Gatter (19) angesteuert werden. Bei Beendigung des Blinkens stellt der Impulswächter die Asynchronzähler (10,11 bzw. 12,13) über die jeweiligen Rückstelleingänge (CT=0) zurück.

Diese Anordnung ermöglicht aufgrund der frei wählbaren Verbindung der Signalausgänge (CT 0 bzw. CT 1 bzw. CT 2 oder CT 3) der Asynchronzähler 10 (12) mit den Zähleingangen der nachgeschalteten Asynchronzähler 11 (13) eine Auswahl aus verschieden grossen diskreten Einstellschritten, wie folgende Tabelle zeigt:

| Abgriff an Asynchronzähler 10 (12) | Schrittgrösse der Einstellung |
|---|---|
| CT 0 | 2 |
| CT 1 | 4 |
| CT 2 | 8 |
| CT 3 | 16 |

Da mit einem 4-Bit-Kodierschalter eine maximale Einstellung von 1+2+4+8=15 möglich ist, sind unter Einbezug des einen Blinksignals, welches für das Kriterium P>Q zusätzlich benötigt ist, folgende maximale Impulszahlen möglich:

| Abgriff am Asynchronzähler 10 (12) | Einstellbare maximale Impulszahl |
|---|---|
| CT 0 | 30 + 1 = 31 |
| CT 1 | 60 + 1 = 61 |
| CT 2 | 120 + 1 = 121 |
| CT 3 | 240 + 1 = 241 |

Wie die praktische Erfahrung zeigt, ist eine Einstellung der maximalen Anzahl Blinksignale unterhalb 30 im allgemeinen wenig sinnvoll. Dadurch fällt ein Abgriff am Signalausgang (CT 0) aus rein praktischen Gründen ausser Betracht. Auch hat sich in der Praxis gezeigt, dass eine Abstufung in Vierer- oder Achter-Schritten am sinnvollsten ist.

## Patentansprüche

1. Elektronische Einrichtung welche nach Betätigung eines Motorfahrzeug-Richtungsblinkers mindestens ein Steuersignal abgibt das beispielsweise zur Erzeugung von Warnsignalen für den Fahrzeuglenker verwendet werden kann sofern die Bedingung, dass während des stetigen rechts- bzw. linksseitigen Blinkens eine analog voreinstellbare Blinkdauer oder eine digital voreinstellbare Anzahl Blinksignale überschritten wird erfüllt ist und die dadurch gekennzeichnet ist, dass sie mit den vom Blinkgeber geschalteten Stromzuführungsleitungen einer rechten und einer linken Blinklampe galvanisch leitend verbunden ist.

2. Einrichtung nach Anspruch 1, bestehend aus rechts- bzw. linksseitig zugeordneten identischen Signalverarbeitungsketten, welche aufgebaut sind aus einem Signalgeber mit Signalempfänger, einem nachfolgenden Entpreller/Pulsformer, einem Impulswächter und einem Timer, welche Signalverarbeitungsketten abschliessend verbunden sind mit einem die Signale beider Ketten verknüpfenden Logik-Baustein nach Anspruch 21 oder 22, der bei Erfüllung der Bedingung nach Anspruch 1 mindestens ein Steuersignal abgibt.

3. Signalsender nach Anspruch 2, deren rechts/links-Selektivität bewerkstelligt wird durch zwei gegensinnig paralellen Serieschaltungen, welche je aus mindestens einem EIN-EIN-Schaltrelais und einer Diode bestehen und mit den vom Blinkgeber geschalteten Stromzuführungen einer rechten und einer linken Blinklampe galvanisch leitend verbunden sind.

4. Signalempfänger nach Anspruch 2, welche aus der berührungsfrei magnetisch betätigten Kontaktanordung der EIN-EIN-Schaltrelais nach Anspruch 3 bestehen.

5. Signalsender nach Anspruch 2, deren rechts/links-Selektivität bewerkstelligt wird durch zwei gegensinnig paralellen Serieschaltungen, welche je aus mindestens einem EIN-AUS-Schaltrelais und einer Diode bestehen und mit den vom Blinkgeber geschalteten Stromzuführungen einer rechten und einer linken Blinklampe galvanisch leitend verbunden sind.

6. Signalempfänger nach Anspruch 2, welche aus der berührungsfrei magnetisch betätigten Kontaktanordung der EIN-AUS-Schaltrelais nach Anspruch 5 bestehen.

7. Signalsender nach Anspruch 2, deren rechts/links-Selektivität bewerkstelligt wird durch zwei gegensinnig paralellen Serieschaltungen, welche je aus mindestens der eingangsseitigen Schaltungsanordnung eines Optokopplers und einer Diode sowie ggf. einem Widerstand bestehen und mit den vom Blinkgeber geschalteten Stromzuführungen einer rechten und einer linken Blinklampe galvanisch leitend verbunden sind.

8. Signalempfänger nach Anspruch 2, welche aus der berührungsfrei durch elektromagnetische Wellen gesteuerten ausgangsseitigen Schaltungsanordnung eines Optokopplers nach Anspruch 7 bestehen.

9. Entpreller/Pulsformer nach Anspruch 2 welcher die mit der Kontaktanordnung gemäss Anspruch 4 und den dieser Kontaktanordnung paarweise zugeordneten Widerständen erzeugten HIGH/LOW-Logikpegel mittels bistabiler, aus NICHT-Glieder bestehenden Schaltungsanordnungen in systemkompatibel normierte komplementäre Signalpaare umwandelt.

10. Entpreller/Pulsformer nach Anspruch 2 welcher die mit der Kontaktanordnung gemäss Anspruch 4 und den dieser Kontaktanordnung paarweise zugeordneten Widerständen erzeugten HIGH/LOW-Logikpegel mittels bistabiler, aus NICHT-UND-Glieder bestehenden Schaltungsanordnungen in systemkompatibel normierte komplementäre Signalpaare umwandelt.

11. Entpreller/Pulsformer nach Anspruch 2 welcher die mit der Kontaktanordnung des EIN-AUS-Schaltrelais gemäss Anspruch 6 und dem dieser Kontaktanordnung zugeordneten Widerstand erzeugten HIGH/LOW-Logikpegel jeweils über ein NICHT-Glied resp. über zwei in Serie geschaltete NICHT-Glieder mit vorzugsweise Schmitt-Trigger-Eigenschaften dem zustandsgesteuerten resp. dem flankengesteuerten dynamischen Eingang eines nicht-retriggerbaren Monoflops zuführt, wobei dieses Monoflop, welches aufgrund seiner externen Beschaltungselemente eine Verweilzeit in den instabilen Zustand aufweist welche länger ist als die Prelldauer der Eingangssignale aber kürzer als die verkehrsrechtlich vorgeschriebene Zeitdauer der Blinksignale, systemkompatibel normierte komplementäre Signalpaare erzeugt.

12. Entpreller/Pulsformer nach Anspruch 2 welcher die mit der ausgangsseitigen Schaltungsanordnung des Optokopplers nach Anspruch 8 und dem dieser Schaltungsanordnung zugeordneten Widerstand erzeugten HIGH/LOW-Logikpegel jeweils über ein NICHT-Glied resp. über zwei in Serie geschaltete NICHT-Glieder mit vorzugsweise Schmitt-Trigger-Eigenschaften, dem zustandsgesteuerten resp. dem flankengesteuerten dynamischen Eingang eines nicht-retriggerbaren Monoflops zuführt, wobei dieses Monoflop, welches aufgrund seiner externen Beschaltungselemente eine Verweilzeit in den instabilen Zustand aufweist welche länger ist als die Prelldauer der Eingangssignale aber kürzer als die verkehrsrechtlich vorgeschriebene Zeitdauer der Blinksignale, systemkompatibel normierte komplementäre Signalpaare erzeugt.

13. Impulswächter nach Anspruch 2 bestehend aus einem retriggerbaren Monoflop welches die Stetigkeit des Betriebs der Blinkanlage dadurch überprüft, dass es von den Signalflanken der vom Entpreller/Pulsformer nach den Ansprüchen 9, 10, 11 oder 12 erzeugten Signale, welche dem flankengesteuerten dynamischen Eingang dieses retriggerbaren Monoflops zugeführt werden, in den instabilen Zustand versetzt wird, wonach das Monoflop, welches aufgrund seiner externen Beschaltungselemente eine Verweilzeit in den instabilen Zustand aufweist, welche geringfügig länger ist als die verkehrsrechtlich vorgeschriebene Zeitdauer der Blinksignale, solange in diesem instabilen Zustand verharrt als die Stetigkeit der von den Blinksignalen ausgelösten Signale des Entpreller/Pulsformers nach den Ansprüchen 9, 10, 11 oder 12 gewährleistet ist, dabei Ausgangssignale erzeugend, welche geeignet sind, den Betrieb von Timer nach den Ansprüchen 14 bis 20 zu steuern.

14. Timer nach Anspruch 2, zur Hauptsache bestehend aus einem Monoflop welches die Dauer der Verweilzeit in den instabilen Zustand des Impulswächters nach Anspruch 13 dadurch überwacht, dass es vom Ausgangssignal des Impulswächters in den instabilen Zustand versetzt wird und, stetiges Blinken vorausgesetzt, erst nach Ueberschreiten der mittels externer Beschaltungselemente voreinstellbaren Verweilzeit in den instabilen Zustand wieder in den stabilen Zustand zurückfällt, dabei ein Signal erzeugend das geeignet ist, durch logische Verknüpfung mit dem vom Entpreller/Pulsformer gemäss den Ansprüchen 9, 10, 11 oder 12 erzeugten Signal in einem Logik-Baustein nach Anspruch 21 bzw. 22, das von der Einrichtung gemäss Anspruch 1 abzugebende Steuersignal zu erzeugen.

15. Timer nach Anspruch 2, bestehend aus einem vorzugsweise auf der Basis eines Dual-4-Bit-Asynchronzählers aufgebauten 6-Bit-Asynchronzähler welcher die Anzahl der von einem der Einrichtungen nach Anspruch 9, 10, 11 oder 12 erzeugten Signalflanken solange zählt, wie es das vom zuständigen Impulswächter gemäss Anspruch 13 abgegebene und am Rückstelleingang der beiden 4-Bit-Asynchronzähler angelegte Signal erlaubt, sowie aus einem 4-Bit-Komparator und einem 4-Bit-Kodierschalter.
Das Ausgangssignal des zweiten Bits des ersten 4-Bit-Asynchronzählers ist dabei an den Signaleingang des zweiten 4-Bit-Asynchronzählers gelegt.
Die HIGH/LOW-Signalpegel der vier Signalausgänge des zweiten 4-Bit-Asynchronzählers werden vom 4-Bit-Komparator verglichen mit den mittels 4-Bit-Kodierschalter und der diesem zugeordneten Widerstände voreinstellbaren logischen HIGH/LOW-Signalpegeln, was eine Einstellung der Begrenzung der Anzahl Blinksignale in diskreten Vierer-Stufen ermöglicht, wobei der 4-Bit-Komparator beim Ueberschreiten der voreingestellten Anzahl Blinksignale ein Signal erzeugt, das geeignet ist, durch logische Verknüpfung mit dem von den Entpreller/Pulsformern gemäss den Ansprüchen 9, 10, 11 oder 12 erzeugten Signal in einem Logik-Baustein nach Anspruch 21 bzw. 22, das von der Einrichtung gemäss Anspruch 1 abzugebende Steuersignal zu erzeugen.

16. Timer nach Anspruch 15, wobei das Ausgangssignal des dritten Bits des ersten 4-Bit-Asynchronzählers an den Signaleingang des zweiten 4-Bit-Asynchronzählers gelegt wird, woraus sich ein 7-Bit-Asynchronzähler ergibt, welcher mit einem 4-Bit-Kodierschalter eine Einstellung der Begrenzung der Anzahl Blinksignale in diskreten Achter-Stufen ermöglicht.

17. Timer nach Anspruch 15, wobei das Ausgangssignal des vierten Bits des ersten 4-Bit-Asynchronzählers an den Signaleingang des zweiten 4-Bit-Asynchronzählers gelegt wird, woraus sich ein 8-Bit-Asynchronzähler ergibt, welcher mit einem 4-Bit-Kodierschalter eine Einstellung der Begrenzung der Anzahl Blinksignale in diskreten Sechszehner-Stufen ermöglicht.

18. Timer nach Anspruch 14, wobei die analoge Einstellung der Verweilzeit der Monoflops in den instabilen Zustand durch externe Beschaltung mit Festwiderständen, Kondensatoren, Dioden und Tandempotentiometern bewerkstelligt wird.

19. Timer nach Anspruch 14 und 18, wobei anstelle der Tandempotentiometer Festwiderstände und diesen zugehörige Lötbrücken verwendet werden.

20. Timer nach Anspruch 14 und 18, wobei anstelle der Tandempotentiometer mittels Schalter zuresp. wegschaltbare Festwiderstände verwendet werden.

21. Logische Verknüpfung nach Anspruch 2, bestehend aus mindestens einem rechts/links-unabhängigen UND-ODER-Gatter, welches durch Verknüpfung der Ausgangssignale der Timer nach den Ansprüchen 14 bis 20 mit den Ausgangssignalen von den Entpreller/Pulsformern nach den Ansprüchen 9 bis 12 das von der Einrichtung gemäss Anspruch 1 abzugebende Steuersignal erzeugt.

22. Logische Verknüpfung nach den Ansprüchen 2 und 21, wobei anstelle des UND-ODER-Gatters ein UND/NICHT-ODER-Gatter verwendet wird.
